# EUROPÄISCHE PATENTSCHRIFT

(11) **EP 2 176 584 B1**
(45) Veröffentlichungstag und Bekanntmachung des Hinweises auf die Patenterteilung: **22.06.2016**
(21) Anmeldenummer: 07788354.4
(22) Anmeldetag: 10.08.2007
(51) Int. Cl.: F21S 9/03, F21V 23/04, H05B 37/02, F21Y 115/10

(54) **LEUCHTE FÜR MINDESTENS EINE LED UND SENDER ZUR ERZEUGUNG EINES FUNKSIGNALS FÜR EINE DERARTIGE LEUCHTE**
LIGHTING DEVICE FOR AT LEAST ONE LED AND TRANSMITTER FOR GENERATING A RADIO SIGNAL FOR SUCH A DEVICE
APPAREIL D'ÉCLAIRAGE POURVU D'AU MOINS UNE DEL ET ÉMETTEUR POUR LA PRODUCTION D'UN SIGNAL RADIO POUR UN TEL APPAREIL

(43) Veröffentlichungstag der Anmeldung: 21.04.2010
(73) Patentinhaber: OSRAM GmbH, 80807 München (DE)
(72) Erfinder: BOSNJAK, Zoran, 81477 München (DE); CHROBAK-KANDO, Jeanine, 77767 Appenweier (DE); DELLIAN, Harald, 83533 Edling (DE); WEMMER, Gert, 84034 Landshut (DE)
(86) Internationale Anmeldenummer: PCT/EP2007/058297
(87) Internationale Veröffentlichungsnummer: WO 2009/021544

(56) Entgegenhaltungen:
- EP-A1- 1 091 331
- DE-A1- 4 120 849
- DE-A1- 10 206 418
- FR-A- 2 798 214
- GB-A- 2 208 026
- US-A- 5 848 054
- US-A- 6 120 165

## Beschreibung

### Technisches Gebiet

Die vorliegende Erfindung betrifft eine Leuchte mit mindestens einer LED, einem Solarmodul, einem Akkumulator, einer zwischen das Solarmodul und den Akkumulator gekoppelten Ladeelektronik, und einer mit dem Akkumulator gekoppelten Ansteuerschaltung für die mindestens eine LED. Sie betrifft überdies weiterhin ein Leuchtensystem zur Erzeugung eines Funksignals zur Ansteuerung einer derartigen Leuchte.

### Stand der Technik

Eine gattungsgemäße Leuchte ist bekannt. Dabei wird tagsüber Solarenergie für die Nacht gespeichert und, sobald es dunkel ist, schaltet sich die bekannte Leuchte automatisch an und ermöglicht beispielsweise die Kennzeichnung von Gehwegen, die Beleuchtung von Hausnummern, oder dient als Spotstrahler oder als Schwimmlicht oder als Gartenstrahler.

Aus der FR 279 82 14 ist eine LED-Leuchte mit einem Akkumulator und einem Solarmodul bekannt, welche den Akkumulator mittels des Solarmoduls und einer Ladeelektronik laden kann. Die Leuchte weist einen Empfänger für Funksignale auf, wobei die LED mittels einer Verarbeitungsvorrichtung aus den Funksignalen angesteuert werden kann.

Aus der EP 1 091 331 A1 ist eine Teilnehmerstelle eines Funkinstallationssystems bekannt, welche zwei Signalerzeugungseinrichtungen aufweist, von denen die eine mit fester Gerätekennung und die andere mit einem beschreibbaren Adressspeicher arbeitet. In den beschreibbaren Adressspeicher kann mittels eines Inbetriebnahmewerkzeugs eine Adresse eingeschrieben werden.

### Darstellung der Erfindung

Die Aufgabe der vorliegenden Erfindung besteht darin, eine gattungsgemäße Leuchte derart weiterzubilden, dass weitere Einsatzmöglichkeiten eröffnet werden.

Diese Aufgabe wird gelöst durch eine Leuchte mit den Merkmalen von Patentanspruch 1. Gemäß einem zweiten Aspekt stellt die vorliegende Erfindung auch ein Leuchten system zur Erzeugung eines Funksignals für eine erfindungsgemäße Leuchte gemäß Anspruch 10 bereit.

Der vorliegenden Erfindung liegt die Erkenntnis zu Grunde, dass die Einsatzmöglichkeiten von gattungsgemäßen LED-Leuchten erweitert werden können, wenn Maßnahmen vorgesehen werden eine Leuchte kabellos zu steuern. Dazu weist eine erfindungsgemäße Leuchte einen mit dem Akkumulator gekoppelten Empfänger auf, der ausgelegt ist, ein Funksignal zu empfangen und eine mit dem Akkumulator und dem Empfänger gekoppelte Verarbeitungsvorrichtung, die ausgelegt, aus den mit den Funktionalen empfangenen Daten mindestens ein Ansteuersignal für die Ansteuerschaltung zu bilden. Dadurch können je nach verwendeter oder verwendeten LEDs weiße oder farbige Muster, Farbspiele oder Schriften erzeugt werden, insbesondere in einer zweidimensionalen Fläche oder, wobei hier insbesondere auch an Kunstwerke zwei- oder dreidimensionaler Art zu denken ist.

Anders als im Stand der Technik, wo die Gefahr besteht, dass unterschiedliche Leuchten aufgrund von herstellungsbedingten Abweichungen der zum Einschalten benötigten Helligkeitssensoren zu unterschiedlichen Zeitpunkten einschalten, kann durch kabellose Ansteuerung einer erfindungsgemäßen LED-Leuchte eine oder können mehrere LED-Leuchten simultan ein- und ausgeschaltet werden.

Erfindungsgemäß umfasst die Leuchte weiterhin eine mit dem Akkumulator gekoppelte Speichervorrichtung. Dadurch besteht die Möglichkeit, nur einmalig eine Lichtsequenz durch ein Funksignal zu übertragen, wobei diese Lichtsequenz in der Speichervorrichtung abgelegt wird und entweder fortwährend oder nach Aufforderung abgespielt wird. In der Speichervorrichtung werden insbesondere Angaben abgespeichert, die angeben, wann für welche Zeitdauer Licht welcher Farbe von einer erfindungsgemäßen Leuchte abgegeben werden soll.

Im Hinblick auf einen großen Leistungsbereich des von der Leuchte abzugebenden Lichts umfasst die Leuchte bevorzugt einen Spannungswandler, insbesondere einen Hochsetzsteller. Damit lässt sich die Akkumulatorspannung, die üblicherweise in der Größenordnung von 2,4 V liegt, auf höhere Werte transformieren, die dann zur Ansteuerung der mindestens einen LED verwendet werden können.

In diesem Zusammenhang ist bevorzugt, wenn die Leuchte weiterhin einen Mikrocontroller und eine Stromquelle umfasst.

Bevorzugt ist die mindestens eine LED eine RGB-LED. Alternativ ist bevorzugt, wenn die Leuchte mindestens drei verschiedenfarbige LEDs umfasst. Dadurch wird die Möglichkeit geschaffen, die Leuchte derart anzusteuern, dass das von ihr abgegebene Licht in der Farbe variiert.

Erfindungsgemäß umfasst die Speichervorrichtung einen Adressspeicher, der ausgelegt ist, in ihm eine Adresse zu hinterlegen, um der Leuchte mit dem Funksignal übertragene adressspezifische Daten zuzuweisen. Dadurch können einem Verbund von mehreren erfindungsgemäßen Leuchten unterschiedliche oder gleiche Adressen zugeteilt werden und durch einen erfindungsgemäßen Sender adressspezifische Lichtsequenzen übertragen und in der Speichervorrichtung der jeweiligen Leuchten abgelegt werden. Damit können einzelne Leuchten oder unterschiedliche Gruppen von Leuchten zu gewünschten Zeitpunkten gewünschte Lichtsignale abgeben. Dies ermöglicht überdies die nachträgliche Aufnahme oder den Austausch defekter erfindungsgemäßer Leuchten unter geringsten Kosten, da eine erfindungsgemäße Leuchte keinen Sender aufweisen muss, um die entsprechende Leuchte bei einer Steuerzentrale anzumelden

Erfindungsgemäß umfasst die Leuchte eine Aktivierungsvorrichtung, insbesondere einen Drucktaster. Durch Bedienung der Aktivierungsvorrichtung kann vorgesehen sein, dass die Leuchte in einen Zustand versetzt wird, in der eine Adresse in die Leuchte eingebbar ist. Bevorzugt wird die Eingabe einer Adresse vorgenommen, bevor die Leuchte(n) montiert wird/werden. Dabei kann die Aktivierungsvorrichtung insbesondere ausgelegt sein, nach ihrer Aktivierung die Leuchte in einen Zustand zu versetzen, indem diese ausgelegt ist, eine per Funksignal übermittelte Adresse zu empfangen und im Adressspeicher zu speichern. Besonders vorteilhaft ist es, wenn die Leuchte weiterhin ausgelegt ist, eine erfolgreiche Speicherung einer Adresse zu quittieren, insbesondere durch ein optisches und/oder ein akustisches Signal. Damit kann eine Bedienperson auf einfache Weise feststellen, ob die Übermittlung und Speicherung einer Adresse geglückt ist oder ob der Vorgang wiederholt werden muss.

Erfindungsgemäß ist vorgesehen, dass die Leuchte ausgelegt ist, wenn noch keine Adresse im Adressspeicher eingetragen ist, ohne Aktivierung der Aktivierungsvorrichtung in einen Zustand zu gehen, in dem sie ausgelegt ist, eine per Funksignal übermittelte Adresse zu empfangen und im Adressspeicher zu speichern. Dies eröffnet die Möglichkeit die erstmalige Adressübermittlung ohne Aktivierung der Aktivierungsvorrichtung zu ermöglichen.

Bei einer bevorzugten Weiterbildung einer erfindungsgemäßen Leuchte umfasst die Verarbeitungsvorrichtung eine Zeitmessvorrichtung, die ihrerseits einen Quarzoszillator umfasst. Bevorzugt ist dabei die Verarbeitungsvorrichtung ausgelegt, auf entsprechende, mit dem Funksignal empfangene Daten die Zeitmessvorrichtung darauf zu synchronisieren, wobei die Verarbeitungsvorrichtung weiterhin ausgelegt ist, das Ansteuersignal für die Ansteuerschaltung in eine zeitliche Beziehung zu einem von der Zeitmessvorrichtung abgegebenen Signal zu bringen, insbesondere damit zu synchronisieren. Durch diese Maßnahme wird die Möglichkeit bereitgestellt, verschiedene erfindungsgemäße Leuchten miteinander zu synchronisieren. So kann beispielsweise eine Synchronisierung jede Stunde vorgenommen werden, wobei innerhalb der Stunde der leuchteninterne Quarzoszillator den Takt angibt. Die Abweichung innerhalb einer Stunde mehrerer Leuchten untereinander bewegt sich erfahrungsgemäß in der Größenordnung von 1 bis 5 ms und fällt damit einem Betrachter nicht weiter auf.

Bei einer bevorzugten Ausführungsform eines erfindungsgemäßen Leuchtensystems weist der Sender eine Speichervorrichtung zur Speicherung der mit dem Funksignal zu übermittelnden Daten auf. Dabei repräsentieren die in der Speichervorrichtung gespeicherten Daten insbesondere mindestens eine Lichtsequenz für mindestens eine Leuchte.

Es ist weiterhin bevorzugt, wenn der Sender eine Schnittstelle zum Übertragen von Daten umfasst, die mindestens eine Lichtsequenz für mindestens eine Leuchte repräsentieren. Bevorzugt stellt die Schnittstelle eine Schnittstelle zu einem PC, insbesondere eine WLAN- oder eine USB-Schnittstelle dar. Mit entsprechender Software und einer graphischen Benutzeroberfläche wird damit dem Anwender die Möglichkeit bereitgestellt, Lichtsequenzen am PC zu programmieren. Diese werden anschließend über die erwähnte Schnittstelle an den Sender übermittelt und dort in der Speichervorrichtung zwischengespeichert. Anschließend können diese Lichtsequenzen an die erfindungsgemäßen Leuchten, insbesondere adressspezifisch, per Funk gesendet werden. Es ist weiterhin bevorzugt, wenn der Sender ein Solarmodul und/oder eine Aufnahme für eine Batterie umfasst. Damit, insbesondere in Verbindung mit einer WLAN-Schnittstelle, kann der Sender ebenfalls unabhängig von einem Netzanschluss montiert werden.

Der Sender kann bevorzugt eine Adressübermittlungsvorrichtung, insbesondere einen Drucktaster, umfassen, die ausgelegt ist, nach ihrer Aktivierung mindestens eine Adresse an mindestens eine Leuchte zu übermitteln. Besonders einfach gestaltet es sich, wenn die Adresse eine laufende Adresse ist. Insbesondere bei der nachträglichen Aufnahme weiterer Leuchten zu einem bestehenden Verbund kann die Adresse jedoch auch eine vorbestimmbare Adresse sein.

Eine bevorzugte Weiterbildung eines Senders umfasst einen Taktgenerator. Dabei ist der Taktgenerator bevorzugt ausgelegt, zu vorbestimmbaren Zeiten ein Synchronisierungssignal an mindestens eine Leuchte zu senden. Dies stellt die Möglichkeit bereit, mehrere in einem Verbund zusammengefasste Leuchten zu synchronisieren. Damit lassen sich auch komplexe Lichtsequenzen störungsfrei realisieren.

Weiterhin ist bevorzugt, wenn der Sender ausgelegt ist, ein Ein- und/oder ein Ausschaltsignal an die mindestens eine Leuchte zu senden. Damit können einzelne oder mehrere Leuchten gezielt ein- und ausgeschaltet werden. Besonders bevorzugt ist in diesem Zusammenhang, wenn der Sender weiterhin eine Helligkeitsmessvorrichtung umfasst und ausgelegt ist, das Ein- und/oder das Ausschaltsignal in Abhängigkeit einer von der Helligkeitsmessvorrichtung gemessenen Helligkeit zu senden. Damit lassen sich eine Vielzahl von Leuchten in Abhängigkeit der Helligkeit steuern, ohne dass die Gefahr besteht, dass fertigungsbedingt unterschiedliche mit jeweils einer Helligkeitsmessvorrichtung ausgestattete Leuchten zu unterschiedlichen Zeitpunkten einschalten.

Schließlich kann vorgesehen sein, dass der Sender weiterhin eine Zeitmessvorrichtung umfasst und ausgelegt ist, das Ein- und/oder das Ausschaltsignal zu vorgebbaren Zeiten zu senden. Hierdurch wird die Möglichkeit gegeben, eine Vielzahl von Leuchten automatisch quasi gleichzeitig ein- und auszuschalten.

Weitere vorteilhafte Ausführungsformen ergeben sich aus den Unteransprüchen.

### Kurze Beschreibung der Zeichnung(en)

Im Nachfolgenden wird ein Ausführungsbeispiel einer erfindungsgemäßen Leuchte unter Bezugnahme auf die beigefügten Zeichnungen näher beschrieben. Es zeigen:
- Fig. 1: in schematischer Darstellung den Aufbau eines Ausführungsbeispiels einer erfindungsgemäßen Leuchte;
- Fig. 2: in schematischer Darstellung eine erfindungsgemäße Leuchte sowie einen Sender;
- Fig. 3: eine schematische Darstellung zur Verdeutlichung der Übertragung von Daten, die Lichtsequenzen darstellen, von einem PC zu einem Sender;
- Fig. 4: eine Anordnung mit einer Vielzahl von erfindungsgemäßen Leuchten; und
- Fig. 5: die Anordnung von Fig. 4 einschließlich eines Senders.

### Bevorzugte Ausführung der Erfindung

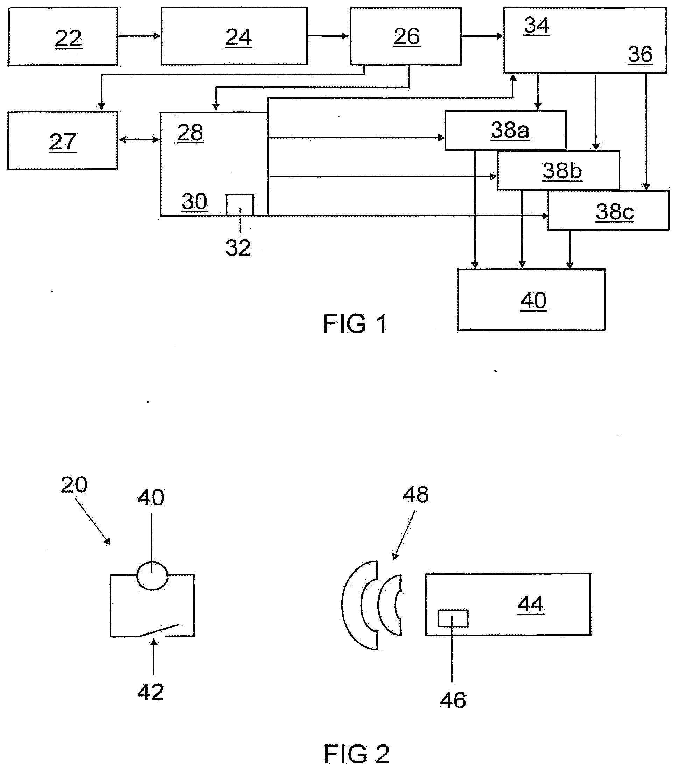

Fig. 1 zeigt in schematischer Darstellung den Aufbau einer erfindungsgemäßen Leuchte 20. Sie umfasst ein Solarmodul 22, das auch als Photovoltaikmodul oder Solargenerator bezeichnet wird, und ausgelegt ist, insbesondere das Licht der Sonne direkt in elektrische Leistung umzuwandeln. Es umfasst eine Glasscheibe, meist so genanntes Einscheibensicherheitsglas, eine transparente Kunststoffschicht, in der die Solarzellen eingebettet sind sowie mehrere mono- oder polykristalline Solarzellen, die durch Lötbändchen elektrisch miteinander verschaltet sind. Die Rückseitenkaschierung wird meistens mit einer witterungsfesten Kunststoffverbundfolie vorgenommen. Das Solarmodul steuert eine Ladeelektronik 24 an, die ihrerseits ausgelegt ist, einen Akkumulator 26 zu laden. Der Akkumulator versorgt einen Mikrocontroller 28, eine Speichervorrichtung 30, die einen Adressspeicher 32 umfasst sowie einen Hochsetzsteller 34, dem ein Tiefentladeschutz 36 zugeordnet ist, und einen Empfänger 27, der ausgelegt ist ein Funksignal zu empfangen. Der Hochsetzsteller 34 steuert drei Stromregler 38a bis c an, wobei jeder Stromregler einer Farbe einer RGB-LED 40 zugeordnet ist. Die Aktivierung der Stromregler 38a bis 38c erfolgt farbspezifisch durch den Mikrocontroller 28 und die Speichervorrichtung 30 sowie den Adressspeicher 32. Der Mikrocontroller 28 steuert weiterhin den Hochsetzsteller 34.

Fig. 2 zeigt eine im Hinblick auf Fig. 1 erweiterte Darstellung einer erfindungsgemäßen Leuchte 20. Diese weist einen Drucktaster 42 auf, wobei der Übersichtlichkeit wegen die Mehrzahl der in Fig. 1 eingeführten Bestandteile einer erfindungsgemäßen Leuchte weggelassen wurden. In Fig. 2 rechts ist ein erfindungsgemäßer Sender 44 dargestellt, der seinerseits einen Drucktaster 46 aufweist. Durch die Symbole 48 wird angezeigt, dass der Sender Signale an mindestens eine erfindungsgemäße Leuchte 20 übermittelt. Wird der Taster 42 gedrückt, wird zunächst gegebenenfalls eine im Adressspeicher 32 einer erfindungsgemäßen Leuchte 20 abgelegte Adresse gelöscht. Die LED 40 blinkt langsam bis zur Adressvergabe. Über den Drucktaster 46 kann die Vergabe einer Adresse durch den Sender 44 ausgelöst werden. Dabei kann vorgesehen sein, dass der Sender in einer vom Benutzer in den Sender 44 eingespeisten Reihenfolge Adressen vergibt oder fortlaufend. Nach Drücken des Drucktasters 46 wird die nächste vorgesehene Adresse vom Sender 44 an mindestens eine erfindungsgemäße, auf eine Adressvergabe wartende Leuchte 20 übermittelt. Diese quittiert die erfolgreiche Adressspeicherung mit zweimal Doppelblinken der LED 40. Innerhalb der Leuchte 20 wird die Adresse im Adressspeicher 32, der insbesondere ein EEPROM sein kann, abgelegt.

Solange der Adressspeicher 32 leer ist, zum Beispiel bei der Erstinbetriebnahme, stellt sich die erfindungsgemäße Leuchte selbständig in den Modus "Adresssuche" ein und wartet auf die Zuteilung einer Adresse durch einen erfindungsgemäßen Sender 44.

Nach der Adressübergabe schaltet die erfindungsgemäße Leuchte 20 und der Sender 44 auf den normalen Betriebsmodus zurück. Damit kann eine bestehende Lichtanlage unter sehr geringem Aufwand erweitert werden. Die Begrenzung des Systems liegt in der maximalen Anzahl der zu vergebenden Adressen, die insbesondere durch die Software begrenzt ist. Vergebene Adressen, die nicht mehr benötigt werden, können in der Software gelöscht werden. Werden mehrere erfindungsgemäße Leuchten 20 gleichzeitig auf Adressspeicherung gesetzt, können im System Gruppen gebildet werden.

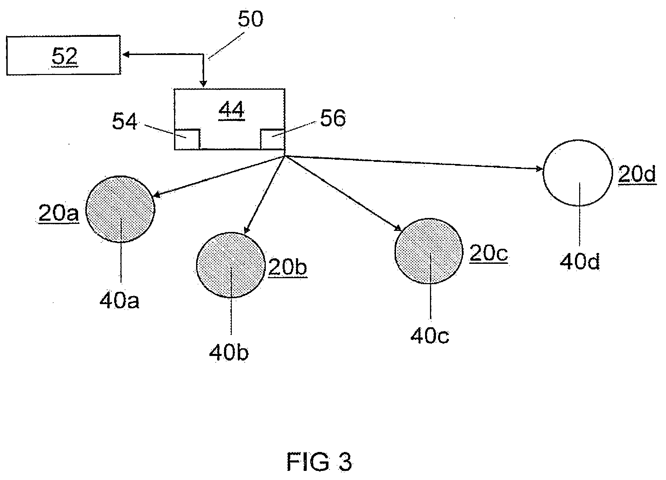

Fig. 3 zeigt beispielhaft einen Sender 44, der vier erfindungsgemäße Leuchten 20a bis 20d ansteuert, von denen der Übersichtlichkeit halber nur die jeweiligen LEDs 40a bis 40d dargestellt sind. Der Sender 44 steht über einer USB-Schnittstelle 50 mit einem PC 52 in Verbindung. Am PC 52 lassen sich verschiedene Lichtsequenzen für die LEDs 40a bis 40d erzeugen und auf einfache Weise an den Sender 44 übermitteln. Dieser überträgt die Lichtsequenzen adressspezifisch an die Leuchten 20a bis 20d.

Der Sender 44 sendet einmalig die einzelnen Steuersequenzen adressiert an die erfindungsgemäßen Leuchten 20a bis 20d. Mittels des PCs 52 kann der Anwender auf einfache Weise Lichtsequenzen, die entsprechenden Daten anschließend an den Sender 44 über die USB-Schnittstelle 50 übermitteln und dort in einer Speichervorrichtung 54 zwischenspeichern. Jede Leuchte 20a bis 20d speichert die ihr adressspezifisch zugewiesene Lichtsequenz in ihrer Speichervorrichtung 30. Vorliegend weist der Sender 44 ein Solarmodul 56 auf. Alternativ könnte der Sender 44 über eine Batterie betrieben werden.

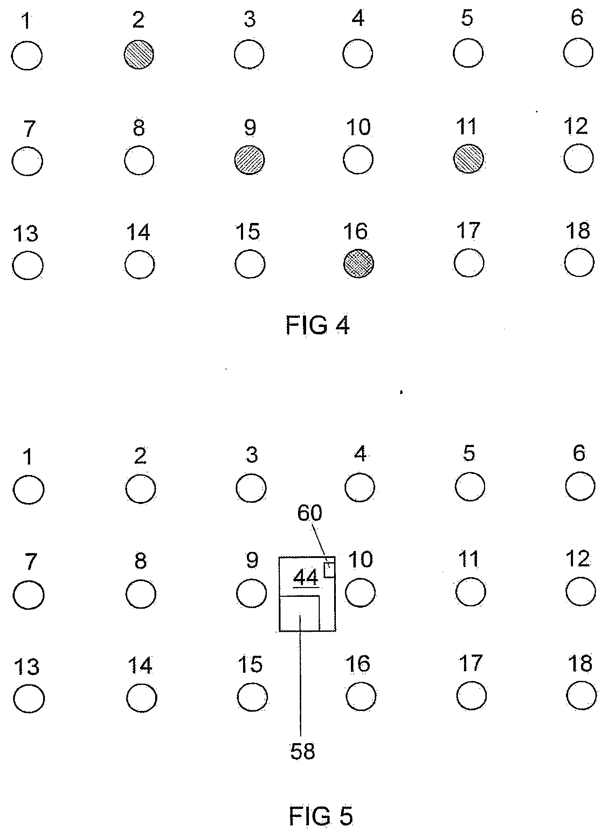

Fig. 4 zeigt eine Anordnung von 18 erfindungsgemäßen Leuchten 20, wobei jeweils nur die aus Übersichtlichkeitsgründen LED angezeigt ist. Jeder Leuchte 20 ist eine Adresse zugewiesen, vorliegend die Adressen 1 bis 18. Jede LED 40 ist als RGB-LED ausgeführt und kann zu verschiedenen Zeitpunkten verschiedene Farben darstellen. Vorliegend leuchten die LEDs 40 mit der Adresse 2 und 11 rot, die LED 40 mit der Adresse 9 leuchtet grün und die LED 40 mit der Adresse 16 leuchtet blau. Die üblichen LEDs 40 leuchten nicht.

Fig. 5 zeigt die Anordnung von Fig. 4, wobei hier zusätzlich der die Leuchten 20 ansteuernde Sender 44 dargestellt ist. Dieser weist einen Taktgenerator 58 und eine Helligkeitsmessvorrichtung 60 auf. Jede Leuchte 20 weist einen Quarzoszillator (nicht dargestellt) auf. Der Taktgenerator 58 des Senders 44 sendet in vorbestimmten zeitlichen Abständen, beispielsweise jede Stunde, ein Synchronisierungssignal an die Leuchten 20. Der Taktgenerator ist überdies ausgelegt, das aus dem Sender 44 und einer Vielzahl von erfindungsgemäßen Leuchten 20 bestehende System an- oder auszuschalten, beispielsweise zur Tag-/Nachtsteuerung, durch Zeitschaltung, etc. Der Taktgenerator 58 des Senders 44 ist überdies ausgelegt, ein An- und Ausschaltsignal an die erfindungsgemäßen Leuchten 20 in Abhängigkeit eines von der Helligkeitsmessvorrichtung 60 gelieferten Signals zu senden.

## Patentansprüche

1. Leuchte mit mindestens einer LED (40), einem Solarmodul (22), einem Akkumulator (26), einer zwischen das Solarmodul (22) und den Akkumulator (26) gekoppelten Ladeelektronik (24), und einer mit dem Akkumulator (26) gekoppelten Ansteuerschaltung (28, 30, 32, 38) für die mindestens eine LED (40);
wobei die Leuchte (20) weiterhin umfasst:
- einen mit dem Akkumulator (26) gekoppelten Empfänger (27), der ausgelegt ist, ein Funksignal zu empfangen; und
- eine mit dem Akkumulator (26) und dem Empfänger (27) gekoppelte Verarbeitungsvorrichtung (28), die ausgelegt ist, aus den mit dem Funksignal empfangenen Daten mindestens ein Ansteuersignal für die Ansteuerschaltung (28, 30, 32, 38) zu bilden,
**dadurch gekennzeichnet, dass** die Leuchte (20) weiterhin eine mit dem Akkumulator (26) gekoppelte Speichervorrichtung (30) umfasst,
wobei die Speichervorrichtung (30) einen Adressspeicher (32) umfasst, der ausgelegt ist, in ihm eine Adresse zu hinterlegen, um der Leuchte (20) mit dem Funksignal übertragene adressspezifische Daten zuzuweisen,
wobei die Leuchte (20) eine Aktivierungsvorrichtung (42), insbesondere einen Drucktaster, umfasst, wobei die Aktivierungsvorrichtung (42) ausgelegt ist, die Leuchte (20) in einen Zustand zu versetzen, in der eine Adresse in die Leuchte (20) eingebbar ist
und die Aktivierungsvorrichtung (42) ausgelegt ist, nach ihrer Aktivierung die Leuchte (20) in einen Zustand zu versetzen, in dem diese ausgelegt ist, eine per Funksignal übermittelte Adresse zu empfangen und im Adressspeicher (32) zu speichern,
wobei die Leuchte (20) weiterhin ausgelegt ist, wenn noch keine Adresse im Adressspeicher (32) eingetragen ist, ohne Aktivierung der Aktivierungsvorrichtung (42) in einen Zustand zu gehen, in dem sie ausgelegt ist, eine per Funksignal übermittelte Adresse zu empfangen und im Adressspeicher (32) zu speichern.

2. Leuchte nach Anspruch 1,
**dadurch gekennzeichnet,**
**dass** die Leuchte (20) weiterhin einen Spannungswandler (34), insbesondere einen Hochsetzsteller, umfasst.

3. Leuchte nach einem der vorhergehenden Ansprüche,
**dadurch gekennzeichnet,**
**dass** die Leuchte (20) weiterhin einen Mikrocontroller (28) und eine Stromquelle umfasst.

4. Leuchte nach einem der vorhergehenden Ansprüche,
**dadurch gekennzeichnet,**
**dass** die mindestens eine LED (40) eine RGB-LED ist.

5. Leuchte nach einem der vorhergehenden Ansprüche,
**dadurch gekennzeichnet,**
**dass** die Leuchte (20) mindestens drei verschiedenfarbige LEDs umfasst.

6. Leuchte nach einem der vorhergehenden Ansprüche
**dadurch gekennzeichnet,**
**dass** die Leuchte (20) ausgelegt ist, eine erfolgreiche Speicherung einer Adresse zu quittieren, insbesondere durch ein optisches und/oder ein akustisches Signal.

7. Leuchte nach einem der vorhergehenden Ansprüche,
**dadurch gekennzeichnet,**
**dass** die Leuchte (20) ausgelegt ist, zusammen mit mehreren anderen erfindungsgemäßen Leuchten (20) gleichzeitig eine per Funksignal übermittelte Adresse zu empfangen und im Adressspeicher (32) zu speichern, um gemeinsam mit den anderen erfindungsgemäßen Leuchten (20) eine Adressgruppe zu bilden.

8. Leuchte nach einem der vorhergehenden Ansprüche,
**dadurch gekennzeichnet,**
**dass** die Verarbeitungsvorrichtung (28) eine Zeitmessvorrichtung umfasst, die ihrerseits einen Quarzoszillator umfasst.

9. Leuchte nach Anspruch 8,
**dadurch gekennzeichnet,**
**dass** die Verarbeitungsvorrichtung (28) ausgelegt ist, auf entsprechende, mit dem Funksignal empfangene Daten die Zeitmessvorrichtung darauf zu synchronisieren, wobei die Verarbeitungsvorrichtung weiterhin ausgelegt ist, das Ansteuersignal für die Ansteuerschaltung in eine zeitliche Beziehung zu einem von der Zeitmessvorrichtung abgegebenen Signal zu bringen, insbesondere damit zu synchronisieren.

10. Leuchtensystem umfassend mindestens eine Leuchte (20) nach einem der vorhergehenden Ansprüche 1-9, und einen als Steuergerät fungierenden Sender (44) zur Erzeugung eines Funksignals zur Ansteuerung der Leuchte (20).

11. Leuchtensystem nach Anspruch 10,
**dadurch gekennzeichnet,**
**dass** der Sender (44) des Leuchtensystems (20) eine Speichervorrichtung (54) zur Speicherung der mit dem Funksignal zu übermittelnden Daten aufweist.

12. Leuchtensystem nach Anspruch 11,
**dadurch gekennzeichnet,**
**dass** die in der Speichervorrichtung (54) gespeicherten Daten mindestens eine Lichtsequenz für mindestens eine Leuchte (20) repräsentieren.

13. Leuchtensystem nach einem der Ansprüche 10 bis 12,
**dadurch gekennzeichnet,**
**dass** der Sender (44) des Leuchtensystems (20) eine Schnittstelle (50) zum Übertragen von Daten umfasst, die mindestens eine Lichtsequenz für mindestens eine Leuchte (20) repräsentieren.

14. Leuchtensystem nach Anspruch 13,
**dadurch gekennzeichnet,**
**dass** die Schnittstelle (50) eine Schnittstelle zu einem PC (52), insbesondere eine WLAN- oder eine USB-Schnittstelle, darstellt.

15. Leuchtensystem nach einem der Ansprüche 10 bis 14,
**dadurch gekennzeichnet,**
**dass** der Sender (44) des Leuchtensystems (20) ein Solarmodul (56) und/oder eine Aufnahme für eine Batterie umfasst.

16. Leuchtensystem nach einem der Ansprüche 10 bis 15,
**dadurch gekennzeichnet,**
**dass** der Sender (44) des Leuchtensystems (20) eine Adressübermittlungsvorrichtung (46), insbesondere einen Drucktaster, umfasst, die ausgelegt ist, nach ihrer Aktivierung mindestens eine Adresse an mindestens eine Leuchte (20) zu übermitteln.

17. Leuchtensystem nach Anspruch 16,
**dadurch gekennzeichnet,**
**dass** die Adresse eine laufende Adresse oder eine vorbestimmbare Adresse ist.

18. Leuchtensystem nach einem der Ansprüche 10 bis 17,
**dadurch gekennzeichnet,**
**dass** der Sender (44) des Leuchtensystems (20) einen Taktgenerator (58) umfasst.

19. Leuchtensystem nach Anspruch 18,
**dadurch gekennzeichnet,**
**dass** der Taktgenerator (58) ausgelegt ist, zu vorbestimmbaren Zeiten ein Synchronisierungssignal an mindestens eine Leuchte (20) zu senden.

20. Leuchtensystem nach einem der Ansprüche 10 bis 19,
**dadurch gekennzeichnet,**
**dass** der Sender (44) des Leuchtensystems (20) ausgelegt ist, ein Ein- und/oder ein Ausschaltsignal an die mindestens eine Leuchte (20) zu senden.

21. Leuchtensystem nach Anspruch 20,
**dadurch gekennzeichnet,**
**dass** der Sender (44) des Leuchtensystems (20) weiterhin eine Helligkeitsmessvorrichtung (60) umfasst und ausgelegt ist, das Ein- und/oder das Ausschaltsignal in Abhängigkeit einer von der Helligkeitsmessvorrichtung (60) gemessenen Helligkeit zu senden.

22. Leuchtensystem nach einem der Ansprüche 20 oder 21,
dass der Sender (44) des Leuchtensystems (20) weiterhin eine Zeitmessvorrichtung umfasst und ausgelegt ist, das Ein- und/oder das Ausschaltsignal zu vorgebbaren Zeiten zu senden.

## Claims

1. Lamp having at least one LED (40), a solar module (22), an accumulator (26), charging electronics (24) coupled between the solar module (22) and the accumulator (26), and a drive circuit (28, 30, 32, 38) for the at least one LED (40), which is coupled to the accumulator (26);
wherein the lamp (20) furthermore comprises:
a receiver (27) which is coupled to the accumulator (26) and is configured to receive a radio signal; and
a processing device (28) which is coupled to the accumulator (26) and the receiver (27) and is configured to form at least one drive signal for the drive circuit (28, 30, 32, 38) from the data received with the radio signal,
**characterized in that** the lamp (20) furthermore comprises a memory device (30) coupled to the accumulator (26),
wherein the memory device (30) comprises an address memory (32) which is configured to store an address in it so as to allocate address-specific data, transmitted with the radio signal, to the lamp (20),
wherein the lamp (20) comprises an activation device (42), in particular a pushbutton,
wherein the activation device (42) is configured to put the lamp (20) in a state in which an address can be entered into the lamp (20) and
the activation device (42) is configured, after it is activated, to put the lamp (20) into a state in which it is configured to receive an address sent by a radio signal and store it in the address memory (32),
wherein the lamp (20) is furthermore configured, when no address has yet been entered in the address memory (32),
without activation of the activation device (42) to enter a state in which it is configured to receive an address sent by a radio signal and store it in the address memory (32).

2. Lamp according to Claim 1 or 2, **characterized in that** the lamp (20) furthermore comprises a voltage transformer (34), in particular a step-up transformer.

3. Lamp according to one of the preceding claims, **characterized in that** the lamp (20) furthermore comprises a microcontroller (28) and a current source.

4. Lamp according to one of the preceding claims, **characterized in that** the at least one LED (40) is an RGB LED.

5. Lamp according to one of the preceding claims, **characterized in that** the lamp (20) comprises at least three differently colored LEDs.

6. Lamp according to one of the preceding claims, **characterized in that** the lamp (20) is configured to acknowledge successful storage of an address, in particular by an optical and/or acoustic signal.

7. Lamp according to one of the preceding claims, **characterized in that** the lamp (20) is configured, simultaneously together with a plurality of other lamps (20) according to the invention, to receive an address sent by a radio signal and to store it in the address memory (32), in order to form an address group jointly with the other lamps (20) according to the invention.

8. Lamp according to one of the preceding claims, **characterized in that** the processing device (28) comprises a chronometer device, which for its part comprises a quartz oscillator.

9. Lamp according to Claim 8, **characterized in that** the processing device (28) is configured to synchronize the chronometer device with corresponding data received with the radio signal, the processing device furthermore being configured to put the drive signal for the drive circuit into a temporal relationship with a signal emitted by the chronometer device, and in particular synchronize it therewith.

10. Lamp system comprising a lamp (20) according to one of the preceding Claims 1-9 and a transmitter (44) functioning as a controller for generating a radio signal to drive the lamp (20).

11. Lamp system according to Claim 10, **characterized in that** the transmitter (44) of the lamp system (20) has a memory device (54) for storing the data to be sent with the radio signal.

12. Lamp system according to Claim 11, **characterized in that** the data stored in the memory device (54) represent at least one light sequence for at least one lamp (20).

13. Lamp system according to one of Claims 10 to 12, **characterized in that** the transmitter (44) of the lamp system (20) comprises an interface (50) for transmitting data which represent at least one light sequence for at least one lamp (20).

14. Lamp system according to Claim 13, **characterized in that** the interface (50) constitutes an interface to a PC (52), in particular a WLAN or USB interface.

15. Lamp system according to one of Claims 10 to 14, **characterized in that** the transmitter (44) of the lamp system (20) comprises a solar module (56) and/or a compartment for a battery.

16. Lamp system according to one of Claims 10 to 15, **characterized in that** the transmitter (44) of the lamp system (20) comprises an address transfer device (46), in particular a pushbutton, which is configured after it is activated to send at least one address to at least one lamp (20).

17. Lamp system according to Claim 16, **characterized in that** the address is a sequential address or a predeterminable address.

18. Lamp system according to one of Claims 10 to 17, **characterized in that** the transmitter (44) of the lamp system (20) comprises a clock generator (58).

19. Lamp system according to Claim 18, **characterized in that** the clock generator (58) is configured to transmit a synchronization signal to at least one lamp (20) at predeterminable times.

20. Lamp system according to one of Claims 10 to 19, **characterized in that** the transmitter (44) of the lamp system (20) is configured to transmit a switch-on and/or switch-off signal to the at least one lamp (20).

21. Lamp system according to Claim 20, **characterized in that** the transmitter (44) of the lamp system (20) furthermore comprises a brightness measuring device (60) and is configured to transmit the switch-on and/or switch-off signal as a function of a brightness measured by the brightness measuring device (60).

22. Lamp system according to one of Claims 20 and 21, **characterized in that** the transmitter (44) of the lamp system (20) furthermore comprises a chronometer device and is configured to transmit the switch-on and/or switch-off signal at predeterminable times.

## Revendications

1. Lampe comprenant au moins une LED (40), un module solaire (22), un accumulateur (26), une électronique de charge (24) couplée entre le module solaire (22) et l'accumulateur (26), et un circuit de commande (28, 30, 32, 38) couplé à l'accumulateur (26), pour l'au moins une LED (40) ;
la lampe (20) comprenant en outre :
- un récepteur (27) couplé à l'accumulateur (26), lequel récepteur est conçu pour recevoir un signal radio ; et
- un dispositif de traitement (28) couplé à l'accumulateur (26) et au récepteur (27), lequel dispositif de traitement est conçu pour former au moins un signal de commande pour le circuit de commande (28, 30, 32, 38) à partir des données reçues au moyen du signal radio,
**caractérisée en ce que** la lampe (20) comprend en outre un dispositif de mémorisation (30) couplé à l'accumulateur (26),
le dispositif de mémorisation (30) comprenant une mémoire d'adresses (32) qui est conçue pour y mémoriser une adresse afin d'attribuer à la lampe (20) des données spécifiques à l'adresse, transmises au moyen du signal radio,
la lampe (20) comprenant un dispositif d'activation (42), notamment un bouton-poussoir,
le dispositif d'activation (42) étant conçu pour mettre la lampe (20) dans un état dans lequel une adresse peut être entrée dans la lampe (20)
et le dispositif d'activation (42) étant conçu, après son activation, pour mettre la lampe (20) dans un état dans lequel celle-ci est conçue pour recevoir une adresse transmise par signal radio et pour la mémoriser dans la mémoire d'adresses (32),
la lampe (20) étant en outre conçue, lorsqu'encore aucune adresse n'est enregistrée dans la mémoire d'adresses (32), pour aller, sans activation du dispositif d'activation (42), dans un état dans lequel elle est conçue pour recevoir une adresse transmise par signal radio et pour la mémoriser dans la mémoire d'adresses (32).

2. Lampe selon la revendication 1,
**caractérisée en ce**
**que** la lampe (20) comprend en outre un convertisseur de tension (34), notamment un convertisseur élévateur.

3. Lampe selon l'une quelconque des revendications précédentes,
**caractérisée en ce**
**que** la lampe (20) comprend en outre un microcontrôleur (28) et une source de courant.

4. Lampe selon l'une quelconque des revendications précédentes,
**caractérisée en ce**
**que** l'au moins une LED (40) est une LED RVB.

5. Lampe selon l'une quelconque des revendications précédentes,
**caractérisée en ce**
**que** la lampe (20) comprend au moins trois LED de différentes couleurs.

6. Lampe selon l'une quelconque des revendications précédentes,
**caractérisée en ce**
**que** la lampe (20) est conçue pour accuser réception d'une mémorisation réussie d'une adresse, notamment au moyen d'un signal optique et/ou acoustique.

7. Lampe selon l'une quelconque des revendications précédentes,
**caractérisée en ce**
**que** la lampe (20) est conçue, en conjonction avec plusieurs autres lampes (20) conformes à l'invention, pour simultanément recevoir une adresse transmise par signal radio et la mémoriser dans la mémoire d'adresses (32) afin de former un groupe d'adresses en commun avec les autres lampes (20) conformes à l'invention.

8. Lampe selon l'une quelconque des revendications précédentes,
**caractérisée en ce**
**que** le dispositif de traitement (28) comprend un dispositif de mesure de temps, qui, de son côté, comprend un oscillateur à quartz.

9. Lampe selon la revendication 8,
**caractérisée en ce**
**que** le dispositif de traitement (28) est conçu pour synchroniser le dispositif de mesure de temps sur des données correspondantes reçues au moyen du signal radio, le dispositif de traitement étant en outre conçu pour mettre le signal de commande pour le circuit de commande dans une relation temporelle avec un signal donné par le dispositif de mesure de temps, notamment pour le synchroniser avec ce signal.

10. Système d'éclairage comprenant au moins une lampe (20)
selon l'une quelconque des revendications 1 à 9, et un émetteur (44) servant de dispositif de commande pour générer un signal radio pour la commande de la lampe (20).

11. Système d'éclairage selon la revendication 10,
**caractérisé en ce**
**que** l'émetteur (44) du système d'éclairage (20) présente un dispositif de mémorisation (54) pour la mise en mémoire des données à transmettre au moyen du signal radio.

12. Système d'éclairage selon la revendication 11,
**caractérisé en ce**
**que** les données mémorisées dans le dispositif de mémorisation (54) représentent au moins une séquence lumineuse pour au moins une lampe (20).

13. Système d'éclairage selon l'une quelconque des
revendications 10 à 12,
**caractérisé en ce**
**que** l'émetteur (44) du système d'éclairage (20) comprend une interface (50) destinée à transmettre des données qui représentent au moins une séquence lumineuse pour au moins une lampe (20).

14. Système d'éclairage selon la revendication 13,
**caractérisé en ce**
**que** l'interface (50) représente une interface vers un PC (52), notamment une interface WLAN ou une interface USB.

15. Système d'éclairage selon l'une quelconque des
revendications 10 à 14,
**caractérisé en ce**
**que** l'émetteur (44) du système d'éclairage (20) comprend un module solaire (56) et/ou un logement pour une batterie.

16. Système d'éclairage selon l'une quelconque des
revendications 10 à 15,
**caractérisé en ce**
**que** l'émetteur (44) du système d'éclairage (20) comprend un dispositif de transmission d'adresses (46), notamment un bouton-poussoir, qui est conçu, après son activation, pour transmettre au moins une adresse à au moins une lampe (20).

17. Système d'éclairage selon la revendication 16,
**caractérisé en ce**
**que** l'adresse est une adresse courante ou une adresse prédéterminable.

18. Système d'éclairage selon l'une quelconque des
revendications 10 à 17,
**caractérisé en ce**
**que** l'émetteur (44) du système d'éclairage (20) comprend un générateur de rythme (58).

19. Système d'éclairage selon la revendication 18,
**caractérisé en ce**
**que** le générateur de rythme (58) est conçu pour émettre un signal de synchronisation à au moins une lampe (20) à des temps prédéterminables.

20. Système d'éclairage selon l'une quelconque des
revendications 10 à 19,
**caractérisé en ce**
**que** l'émetteur (44) du système d'éclairage (20) est conçu pour émettre un signal de mise sous tension et/ou hors tension à l'au moins une lampe (20).

21. Système d'éclairage selon la revendication 20,
**caractérisé en ce**
**que** l'émetteur (44) du système d'éclairage (20) comprend en outre un dispositif de mesure de luminosité (60) et en ce qu'il est conçu pour émettre le signal de mise sous tension et/ou hors tension en fonction d'une luminosité mesurée par le dispositif de mesure de luminosité (60).

22. Système d'éclairage selon l'une quelconque des
revendications 20 ou 21,
**caractérisé en ce**
**que** l'émetteur (44) du système d'éclairage (20) comprend en outre un dispositif de mesure de temps et en ce qu' il est conçu pour émettre le signal de mise sous tension et/ou hors tension à des temps prédéfinissables.
